# EUROPEAN PATENT APPLICATION

(11) **EP 4 600 077 A1**
(43) Date of publication of application: **13.08.2025**
(21) Application number: 23896540.4
(22) Date of filing: 15.11.2023
(51) Int. Cl.: B60L 53/16, H01R 31/06

(54) **ADAPTER AND CHARGING SYSTEM COMPRISING SAME**

(30) Priority: 30.11.2022 CN 202211517388
(71) Applicant: Nanjing Chervon Industry Co., Ltd., Nanjing, Jiangsu 211106 (CN)
(72) Inventor: ZHU, Hong, Nanjing, Jiangsu 211106 (CN); HUANG, He, Nanjing, Jiangsu 211106 (CN); LI, Zhengzheng, Nanjing, Jiangsu 211106 (CN)
(74) Representative: Sun, Yiming
(86) International application number: PCT/CN2023/131873
(87) International publication number: WO 2024/114388

(57) **Abstract**

Provided are an adapter and a charging system including the adapter. The charging system includes an adapter configured to receive charging power from a charging pile for charging an electric vehicle and a charger pluggably and electrically connected to the adapter and used for charging an energy storage device using the charging power. The adapter has a first interface and a second interface, the first interface is electrically connected to the charging pile, and the second interface is electrically connected to the charger. The preceding technical solution is adopted so that the adapter adapted to the charging pile for a vehicle to acquire electrical energy is provided, and the adapter is pluggably connected to the charger to charge the energy storage device connected to the charger.

## Description

This application claims priority to Chinese Patent Application No. 202211517388.3 filed with the China National Intellectual Property Administration (CNIPA) on Nov. 30, 2022, the disclosure of which is incorporated herein by reference in its entirety.

### TECHNICAL FIELD

The present application relates to a charging system, for example, a charging system for receiving the electric power from a charging pile for a vehicle.

### BACKGROUND

In the related art, most power tools are powered by battery packs. When the battery pack is charged, the battery pack needs to be electrically connected to the mains interface for the output of the electrical grid. Most mains interfaces are arranged indoors. When the user is working outdoors, after the energy in the battery pack is exhausted, it is difficult to find the mains interface for power supply, bringing inconvenience to work.

This part provides background information related to the present application, which is not necessarily the existing art.

### SUMMARY

An object of the present application is to solve or at least alleviate some or all of the preceding problems. An object of the present application is to provide an adapter adapted to a charging pile for a vehicle to acquire electrical energy, and the adapter is pluggably connected to a charger to conveniently charge an energy storage device connected to the charger.

The present application adopts the technical solutions below. A charging system includes an adapter configured to receive charging power from a charging pile for charging an electric vehicle and a charger pluggably connected to the adapter and used for charging an energy storage device using the charging power. The adapter includes at least a first interface and at least a second interface, the first interface is adaptable to the charging pile, and the second interface is adaptable to the charger.

In some examples, the first interface and the second interface are of different types.

In some examples, the first interface is pluggably connected to the charging pile.

In some examples, the first interface includes an input power terminal and a communication terminal, where the power terminal is used for receiving the charging power from the charging pile, and the communication terminal is communicatively connected to a communication terminal of the charging pile so that a communication protocol between the charging pile and the adapter is implemented.

In some examples, the communication manner between the communication terminal of the adapter and the communication terminal of the charging pile includes wired communication or wireless communication.

In some examples, the adapter further includes a controller and a switch, where the controller is electrically connected to the switch and is used for controlling the state of the switch and thus controlling the electric power output of the second interface.

In some examples, the adapter further includes a detection device electrically connected to the controller, the detection device is used for detecting the current on a power path, and the controller is configured to control the switch to be turned off when the current on the power path is greater than or equal to a threshold.

In some examples, the adapter further includes a voltage conversion module for converting a first voltage into a second voltage, where the second voltage is adapted to the charger.

In some examples, the input voltage of the first interface is a first voltage, the output voltage of the second interface is a second voltage, and the first voltage is basically equal to the second voltage.

In some examples, the input voltage of the first interface is a first voltage, the output voltage of the second interface is a second voltage.

In some examples, the second interface of the adapter includes an output power terminal, and the output power terminal is electrically connected to the charger and used for transmitting the charging power to the charger.

In some examples, the adapter has at least a housing, and the first interface and the second interface are formed on the housing.

In some examples, the energy storage device includes at least one battery pack, and the total capacity of the energy storage device is greater than or equal to 2 Ah and less than or equal to 25 Ah.

In some examples, the battery pack is adaptable to at least a handheld power tool and a wheeled power tool, and the battery pack is detachably mounted onto the handheld power tool or the wheeled power tool.

In some examples, the battery pack is mounted onto the wheeled power tool to acquire the charging power.

To achieve the preceding object, the present application adopts the technical solutions below. A charging system includes an adapter configured to receive charging power from a charging pile for charging an electric vehicle and a charger electrically connectable to the adapter and used for charging an energy storage device using the charging power. The adapter includes at least a first interface, and the first interface is adaptable to the charging pile.

The present application adopts the technical solutions below. An adapter for receiving charging power from a charging pile for charging an electric vehicle includes a housing formed with or connected to at least a first interface and at least a second interface. The first interface is pluggably connected to the charging pile. The second interface is pluggably connected to a charger or an alternating current (AC) power tool. The electric power of the charging pile is capable of supplying electrical energy to the charger or the AC power tool via the adapter.

In some examples, the first interface of the adapter includes an input power terminal and a communication terminal, where the power terminal is used for receiving the charging power from the charging pile, and the communication terminal is connected to a communication terminal of the charging pile so that a communication protocol between the charging pile and the adapter is implemented.

In some examples, the adapter includes a controller and a switch, where the controller is electrically connected to the switch and is used for controlling the state of the switch and thus controlling the electric power output of the second interface.

In some examples, the adapter further includes a detection device electrically connected to the controller, the detection device is used for detecting the current on a power path, and the controller is configured to control the switch to be turned off when the current on the power path is greater than or equal to a threshold.

### BRIEF DESCRIPTION OF DRAWINGS

FIG. 1A is a schematic view of a charging system according to an example of the present application.
FIG. 1B is a schematic view of a battery pack in FIG. 1A and power tools to which the battery pack is adapted.
FIG. 2A is a schematic view of a charging system according to another example of the present application.
FIG. 2B is a schematic view of a battery pack in FIG. 2A and power tools to which the battery pack is adapted.
FIG. 3 is a schematic view of a charging system according to another example of the present application.
FIG. 4 is a schematic view of a charging system according to another example of the present application.
FIG. 5 is a schematic diagram illustrating the terminal connection between an adapter and a charging pile according to an example of the present application.
FIG. 6 is an electrical schematic diagram of an adapter according to an example of the present application.
FIG. 7 is an electrical schematic diagram of an adapter according to another example of the present application.
FIG. 8A is a perspective view of an adapter according to an example of the present application.
FIG. 8B is a perspective view of the adapter in FIG. 8A from another perspective.
FIG. 9A is a perspective view of an adapter according to another example of the present application.
FIG. 9B is a perspective view of the adapter in FIG. 9A from another perspective.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

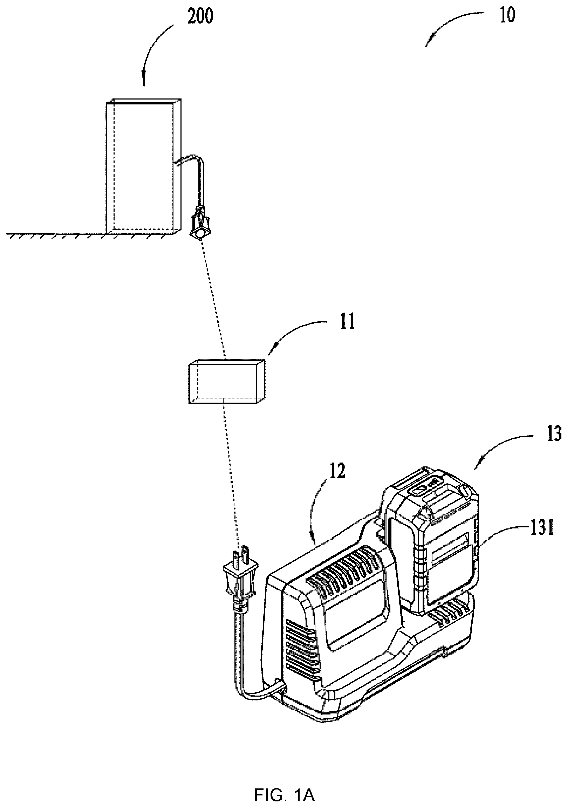

A charging system 10 shown in FIG. 1A is configured to charge an energy storage device 13 using charging power supplied by a charging pile 200 for charging an electric vehicle. In this example, the charging system 10 includes an adapter 11, a charger 12, and the energy storage device 13 electrically connected to the charger 12. The charging pile 200 is also referred to as an electric vehicle charger (EV charger). The EV charger includes a high-output charger capable of outputting an electric power of 100 kW or more. In some examples, the EV charger can output AC power with a voltage range of 80 V to 440 V and a maximum current value of 400 A. In some examples, the EV charger can output direct current (DC) power with a voltage range of 50 V to 850 V and a maximum current value of 400 A. In some examples, the EV charger can output single-phase AC power with a voltage range of 120 V to 230 V and a maximum output power of 6.6 kW. The adapter 11 is configured to receive charging power from the charging pile 200 for charging an electric vehicle. The charger 12 is pluggably and electrically connected to the adapter and used for charging the energy storage device 13 using the charging power. In some examples, the energy storage device 13 includes at least one battery pack. In some examples, the battery pack is adaptable to at least a handheld power tool and a wheeled power tool. In some examples, the battery pack is detachably mounted onto the handheld power tool or the wheeled power tool. In some examples, the battery pack is mounted onto the wheeled power tool to acquire the charging power outputted by the charging pile.

The charging process of the preceding charging system 10 is as follows: when the operator expects to charge the energy storage device 13, the operator may mount the energy storage device 13 onto the charger 12 and connect the adapter 11 to both the charging pile 200 and the charger 12. When the adapter 11 is connected to both the charging pile 200 and the charger 12, the electric power in the charging pile 200 flows to the charger 12 via the adapter 11.

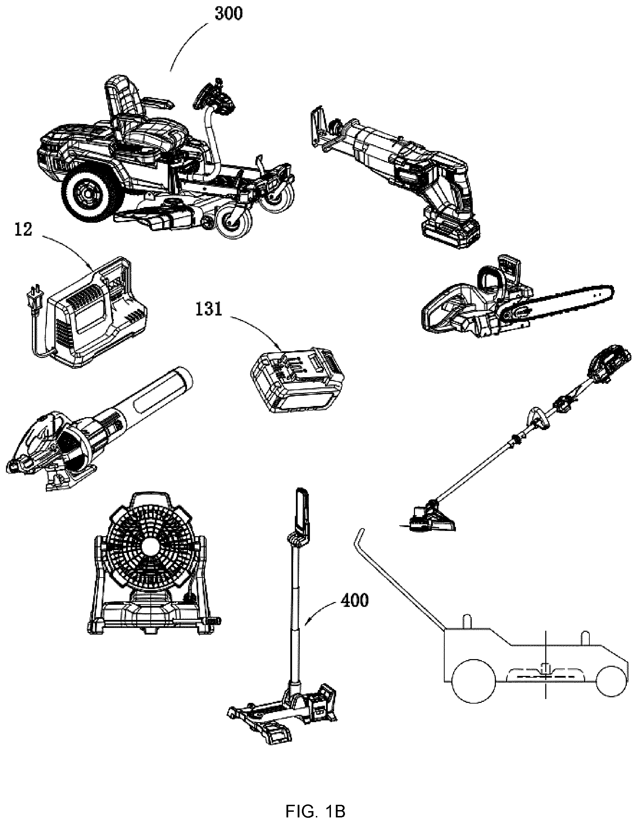

In some examples, as shown in FIG. 1B, a battery pack 131 is detachably connected to the charger 12. The battery pack 131 is further configured to be pluggably connected to a power tool 300. The battery pack 131 is provided with electric power terminals matching the power tool 300. The power tool 300 includes, but is not limited to, a handheld power tool such as an electric drill, an electric wrench, an electric screwdriver, an electric hammer drill, an electric circular saw, or a sander, a table power tool such as a table saw, an outdoor power tool such as a mower, a string trimmer, a pair of electric shears, a hedge trimmer, or an electric saw, or a wheeled power tool such as a manned mower, a snow thrower, or an all-terrain vehicle (ATV).

The advantage of this is that in places where there is no general commercial power supply (such as outdoors), the user can use the electric power in the charging pile 200 to conveniently supply power to the battery pack 131.

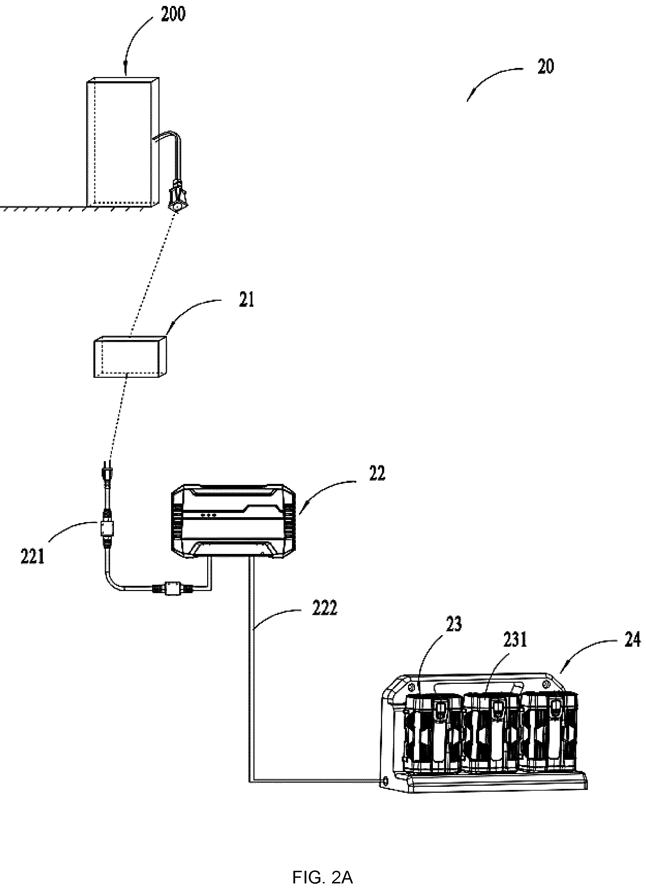

A charging system 20 shown in FIG. 2A is configured to charge multiple energy storage devices 23 simultaneously using charging power supplied by the charging pile 200 for charging an electric vehicle. The difference from the preceding charging system 10 is that, in this example, the charging system 20 further includes an adapter device 24 electrically connected between a charger 22 and the energy storage devices 23. The energy storage devices 23 are not directly electrically connected to the charger 22 and are electrically connected to the adapter device 24. Specifically, the adapter device 24 is used for mounting the energy storage devices 23. In this example, the energy storage device 23 includes at least one battery pack. The energy storage device 23 may include two identical battery packs or may include two or more battery packs of different types. In an example, the total capacity of the energy storage device 23 is greater than or equal to 2 Ah and less than or equal to 25 Ah. In an example, the total capacity of the energy storage device 23 is greater than or equal to 2.5 Ah and less than or equal to 5 Ah. In an example, the total capacity of the energy storage device 23 is greater than or equal to 5 Ah and less than or equal to 7.5 Ah. In an example, the total capacity of the energy storage device 23 is greater than or equal to 7.5 Ah and less than or equal to 10 Ah. In an example, the total capacity of the energy storage device 23 is greater than or equal to 10 Ah and less than or equal to 15 Ah. In an example, the total capacity of the energy storage device 23 is greater than or equal to 15 Ah and less than or equal to 20 Ah. In an example, the total capacity of the energy storage device 23 is greater than or equal to 20 Ah and less than or equal to 25 Ah. For example, the energy storage devices 23 have different capacities and different rated (nominal) voltages. The output power of the adapter device 24 is greater than or equal to 500 W and less than or equal to 2000 W.

Specifically, the charger 22 includes an AC input power line 221, a DC output power line 222, and an AC-DC conversion module (not shown in the figure) for implementing a voltage conversion function. The AC input power line 221 is electrically connected to an adapter 21 and used for receiving the charging power outputted by the charging pile 200. The AC-DC conversion module is used for converting the charging power into DC power. In some examples, the AC-DC conversion module includes an AC-DC conversion circuit, such as an inverter circuit. The AC-DC conversion circuit may be a bridge rectifier circuit. The DC output terminal 222 is electrically connected to the adapter device 24 to provide a charge voltage for the multiple energy storage devices 23 mounted onto the adapter device 24. In this example, the output power of the charger 22 is greater than or equal to 500 W and less than or equal to 2000 W.

The charging process of the preceding charging system 20 is as follows: when the operator expects to charge the multiple energy storage devices 23, the operator may mount the multiple energy storage devices 23 onto the adapter device 24 and connect the adapter device 24 to the charger 22. The adapter 21 is connected to both the charging pile 200 and the charger 22. After the adapter 21 is connected to both the charging pile 200 and the charger 22, the electric power in the charging pile 200 flows to the charger 22 via the adapter 21 and then flows to the multiple energy storage devices 23 via the adapter device 24. Of course, multiple adapter devices 24 may be provided and connected in series or in parallel. Those skilled in the art can reasonably design the adapter devices 24 according to actual requirements.

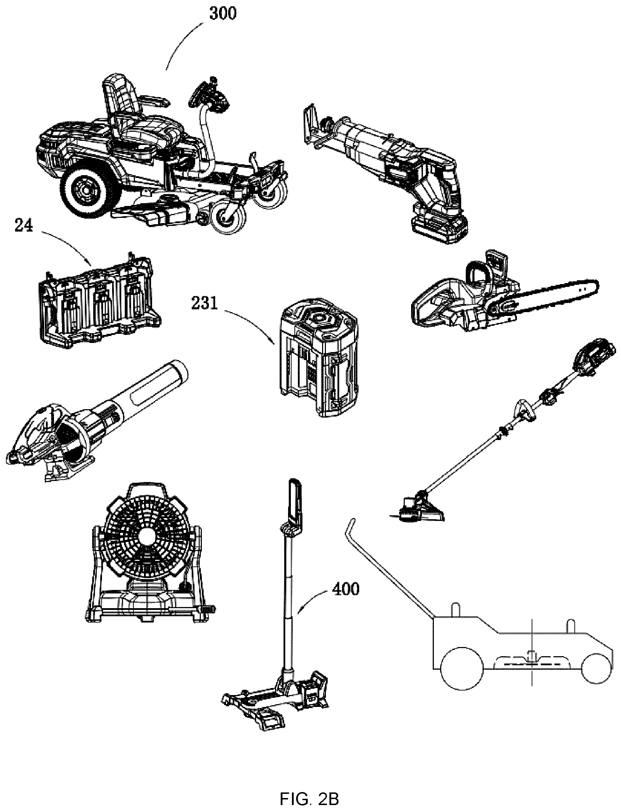

As shown in FIG. 2B, the energy storage device 23 includes a battery pack 231, the battery pack 231 is detachably connected to the adapter device 24, and the adapter device 34 may include multiple charging interfaces to connect multiple battery packs 231. The battery pack 231 is further configured to be pluggably connected to the handheld power tool, and the battery pack 231 is provided with electric power terminals matching the handheld power tool. The handheld power tool includes, but is not limited to, an electric drill, an electric wrench, an electric screwdriver, an electric hammer drill, an electric circular saw, or a sander. The battery pack 231 is further configured to be detachably connected to a handheld garden tool, and the handheld garden tool may be a mower, a string trimmer, a pair of electric shears, a hedge trimmer, or an electric saw. The battery pack 231 is configured to be pluggably connected to a push power tool, and the push power tool may be a push mower or a push snow thrower. Further, the battery pack 231 may be configured to be detachably connected to a riding mower, a stand-on mower, a tractor mower, an ATV, a utility terrain vehicle (UTV), or the like.

In this manner, when the electric power in the energy storage device is exhausted, the electric power in the charging pile is conveniently acquired via the adapter to charge the energy storage device, thereby reusing the battery pack. On the other hand, since the charging system 20 can be connected to more than two energy storage devices at the same time, the charging time for the multiple energy storage devices can be saved.

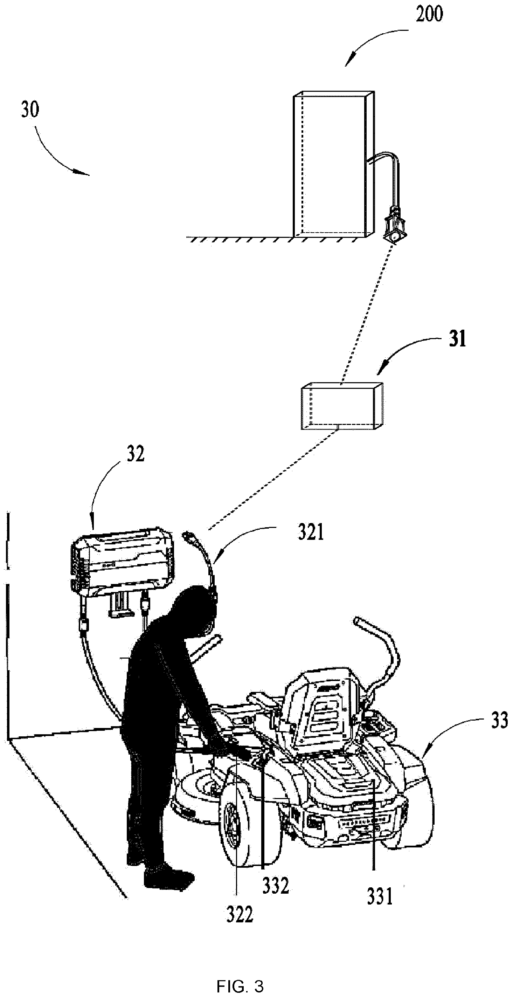

The present application further discloses a charging system 30 as shown in FIG. 3. The charging system 30 is configured to charge the power tool using charging power supplied by the charging pile 200 for charging an electric vehicle. The charging system 30 includes an adapter 31 and a charger 32. The adapter 31 is configured to receive charging power from the charging pile for charging an electric vehicle. The charger 32 is electrically connected to the adapter 31 and is used for charging various power tools. The preceding power tools include, but are not limited to, a riding mower. A riding mower 33 has a battery pack 331 and a charging interface 332 for charging. The charger 32 further includes an AC input power line 321 and a DC output power line 322. The AC input power line 321 is connected to the adapter 31 and used for receiving the charging power outputted by the charging pile 200. The DC output power line 322 is electrically connected to the charging interface 332 of the riding mower 33 and used for transmitting the electric power outputted by the adapter 31 to the battery pack 331 in the riding mower 33. The power tool in this example includes, but is not limited to, a handheld power tool such as an electric drill, an impact drill, an electric wrench, an electric screwdriver, an electric hammer drill, an electric circular saw, or a sander, a table tool such as a table saw, an outdoor tool such as a mower, a snow thrower, a string trimmer, a pair of electric shears, a hedge trimmer, or a chainsaw, or a wheeled electrical device such as a riding mower or an ATV. Apparently, the following examples are part, not all, of the examples of the present application.

In this manner, when the energy storage device in the power tool has insufficient electrical energy and needs to be charged, but there is no suitable mains interface nearby for charging, the operator can use the adapter 31 to acquire electric power from the charging pile 200 to charge the power tool. The advantage of this is that the operator has more choices of charging manners, and the manners in which the power tool acquires electrical energy are increased, thereby reducing the possibility that the power tool cannot operate since there is no mains interface for charging.

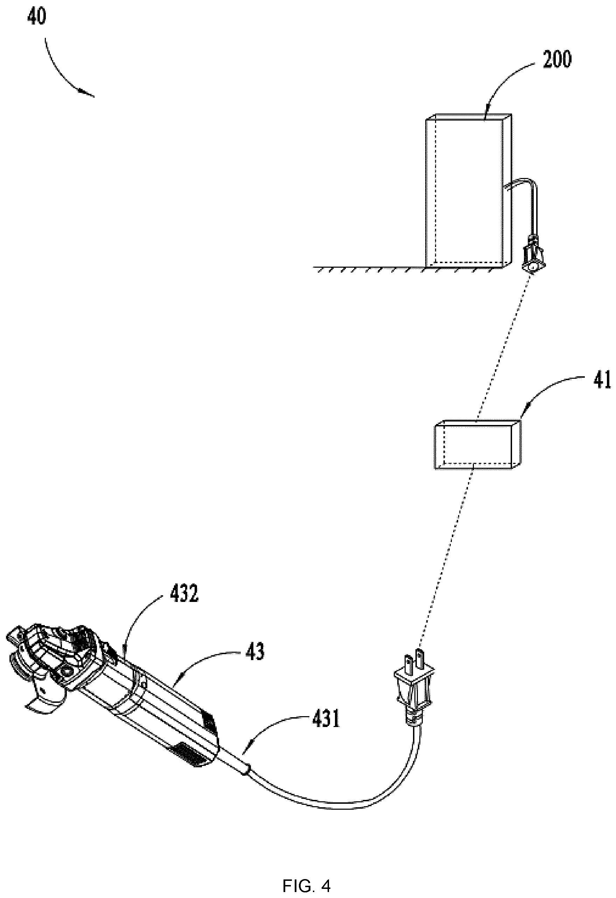

The present application further discloses a charging system 40 as shown in FIG. 4. The charging system 40 is configured to drive the power tool to operate using charging power supplied by the charging pile 200 for charging an electric vehicle. The charging system 40 includes an adapter 41. The adapter 41 is configured to be electrically connected to the power tool and the charging pile 200 to receive charging power from the charging pile for charging an electric vehicle, thereby driving the power tool to operate. The preceding power tool includes, but is not limited to, an angle grinder. Specifically, an angle grinder 43 includes a power line 431 and a motor 432. The power line 431 is electrically connected to the adapter 41 and used for acquiring the electric power outputted by the charging pile, thereby driving the motor 432 to rotate. The power tool in this example includes, but is not limited to, a handheld power tool such as an electric drill, an impact drill, an electric wrench, an electric screwdriver, an electric hammer drill, an electric circular saw, or a sander, a table tool such as a table saw, or an outdoor tool such as a mower, a snow thrower, a string trimmer, a pair of electric shears, a hedge trimmer, or a chainsaw. Apparently, the following examples are part, not all, of the examples of the present application.

The present application further discloses a power supply system for supplying electrical energy to an illumination device using charging power supplied by the charging pile 200 for charging an electric vehicle. The adapter is configured to be electrically connected to the illumination device and the charging pile 200 to receive charging power from the charging pile for charging an electric vehicle, thereby supplying electrical energy to the illumination device. In this manner, the illumination device in this example can be powered by the battery pack and has an AC power interface. When the electrical energy in the battery pack is exhausted, the operator may connect the illumination device to the adapter to acquire electric power from the charging pile 200, thereby continuing using the illumination device.

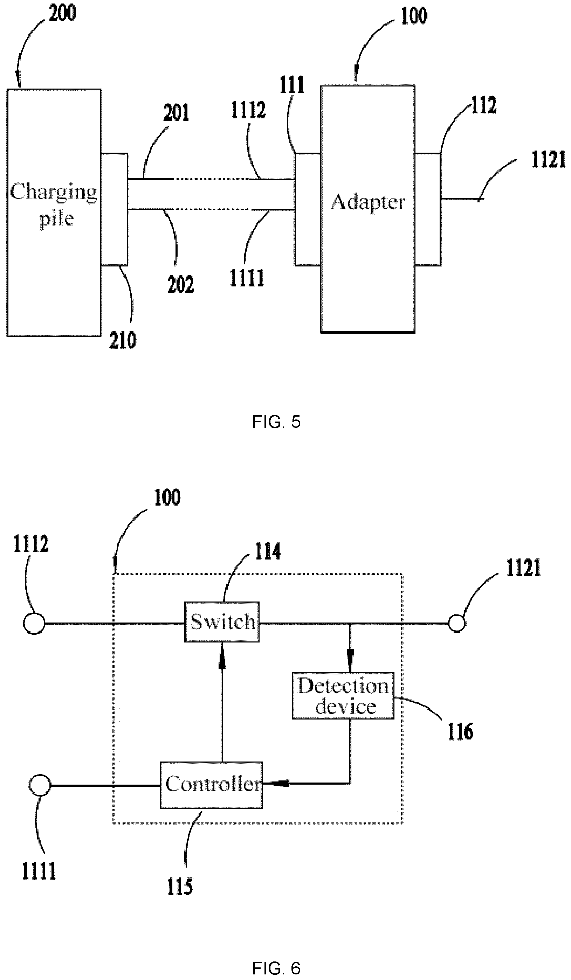

In some examples, as shown in FIG. 5, an adapter 100 includes a first interface 111 and a second interface 112. The first interface 111 is connected to a connector 210 of the charging pile 200, and the second interface 112 is electrically connected to the charger, the power tool, or the illumination device. In this example, the input voltage of the first interface 111 of the adapter 100 is a first voltage, the output voltage of the second interface 112 is a second voltage, and the first voltage is basically equal to the second voltage. It is to be understood that the adapter 100 does not implement the voltage conversion function and is used for communication and power transmission.

In some examples, the first interface 111 of the adapter 100 includes an input power terminal 1111 and a communication terminal 1112. The charging pile 200 includes an output interface, and the output interface includes a communication terminal 201 and an electrical terminal 202. The input power terminal 1111 is electrically connected to the electrical terminal 202 of the charging pile 200 and used for receiving charging power from the charging pile. The communication terminal 1112 is used for connecting the communication terminal 201 of the charging pile 200. In some examples, the communication protocol between the communication terminal 1112 of the first interface 111 of the adapter 100 and the communication terminal 201 of the charging pile includes a controller area network (CAN), Modbus, 485, or power-line carrier technology. In some examples, the first interface 111 of the adapter 100 includes only the input power terminal 1111. The communication manner between the adapter 11 and the charging pile 200 is wireless communication. Specifically, wireless communication includes, but is not limited to, Bluetooth, Wi-Fi, the Internet, a cellular network, or long-term evolution (LTE).

In some examples, the second interface 112 of the adapter 100 includes an output power terminal 1121. Specifically, the output power terminal 1121 is electrically connected to the charger or the power tool to transmit the charging power received through the output power terminal 1121 to the charger or the power tool.

In this manner, the adapter disclosed in the present application can use the electric power from the charging pile for a vehicle to directly supply power to the energy storage device (such as the battery pack) through the charger, or supply power to the battery pack in the power tool through the charger, or directly supply power to the AC power tool and the illumination device. It is to be understood by those skilled in the art that the electric power outputted by the adapter in the present application is adaptable to all tools that need to be connected to AC power. It is to be noted that the types of the first interface 111 and the second interface 112 are not limited in the present application. The type of the first interface 111 depends on the interface type of the charging pile. The type of the second interface 112 depends on the type of the charging interface on the charger or the power tool.

Next, the working principle of the adapter 100 in the present application is described in conjunction with FIG. 6. The adapter 100 further includes a circuit board assembly. Specifically, the circuit board assembly includes a switch 114 and a controller 115. The controller 115 is electrically connected to the switch 114 and is used for controlling the state of the switch and thus controlling the electric power output of the second interface 112. The state of the switch 114 includes an on state and an off state. When the switch 114 is in the on state, the output power terminal 1111 is electrically connected to the output power terminal 1121. When the switch 114 is in the off state, the electrical connection between the output power terminal 1111 and the output power terminal 1121 is disconnected. Specifically, the switch 114 is disposed on the positive path or the negative path of the power path. In some examples, the switch 11 may be a relay, a field-effect transistor, or a switch in another form.

In this example, the controller 115 is connected to the communication terminal 1112 and used for acquiring the communication signal between the adapter and the charging pile. The communication signal includes, but is not limited to, a charging permission signal or a charging start signal. If it is detected that the connector 210 of the charging pile 200 is connected to the first interface 111 of the adapter 100, the controller 116 starts to execute a charging control process. The preceding charging control process includes controlling the switch 114 to be turned on. In some examples, if it is detected that the connector 210 is connected to the first interface 111 of the adapter 100, the charging pile 200 starts to execute an output control process for outputting electric power from the connector 210.

In some examples, if it is determined that the charging pile 200 is not suitable for the charging operation of the adapter 100, the controller 115 sends a determination result of unsuitability to the charging pile 200. In some examples, if it is determined that the adapter 100 is not suitable as a charged object, the charging pile 200 sends a determination result of unsuitability to the controller 115. Then, in the case where at least one of the charging pile 200 and the controller 15 determines that the other one of the charging pile 200 and the controller 15 is unsuitable, both the charging pile 200 and the controller 15 stop the control processes (the charging control process and the output control process), thereby stopping supplying electric power to the adapter 100.

In some examples, if the charging pile 200 receives the charging permission signal from the controller 115, the connection between the first interface 111 of the adapter 100 and the connector 210 is fixed (locked), and the insulation diagnosis is performed on the connection part between the first interface 111 and the connector 210 and the surrounding area of the connection part. The fixing (locking) operation can prevent the connection between the first interface 111 and the connector 210 from being disconnected during the charging operation. In addition, problems such as electric leakage and electric shock can be prevented through the insulation diagnosis. In the case where the insulation diagnosis result is good, the charging pile 200 sends the charging start signal to the controller 115 of the adapter 100. In some examples, in the case where the insulation diagnosis result is bad, the charging pile 200 sends the bad diagnosis result to the controller 115. Then, both the charging pile 200 and the adapter 100 stop the control processes, thereby stopping outputting electric power to the second interface 112.

In some examples, the adapter 100 further has a function of detecting an abnormal state. In some examples, the circuit board assembly of the adapter 100 includes a detection device 116 electrically connected to the controller 115. The detection device 116 is used for acquiring the current on the power path and outputting a detection result to the controller 115. When the charging current acquired by the detection device 116 is greater than a threshold, the controller 115 controls the switch 114 to be turned off, thereby switching the electric power output of the second interface 112 of the adapter 100. Of course, the detection device 116 may also be used for detecting other abnormal parameters, such as temperature and voltage.

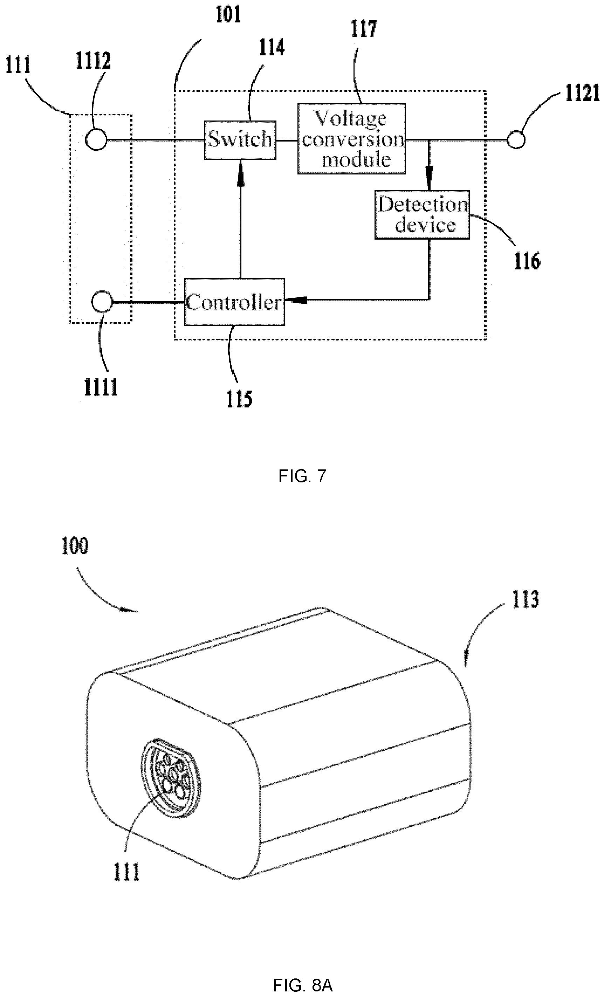

In some examples, as shown in FIG. 7, an adapter 101 further includes a voltage conversion module 117 for converting the first voltage inputted through the first interface 111 into the second voltage outputted through the second interface. The second voltage is adapted to the charger or the power tool connected to the second interface. The first voltage and the second voltage are both voltages of AC power, and the first voltage is different from the second voltage. In some examples, the voltage conversion module 117 includes, but is not limited to, an AC-AC conversion circuit.

In this example, after the first interface 111 of the adapter 101 is connected to the charging pile, the communication terminal 1112 of the first interface 111 performs a handshake protocol with the charging pile, the controller 115 controls the switch 114 to be turned on, and the electric power outputted by the charging pile 200 is outputted from the output power terminal 1121 of the second interface through the input power terminal 1111 and the voltage conversion module 117, thereby supplying electrical energy to the charger or the power tool connected to the adapter 101.

In this manner, when the voltage outputted by the charging pile is not adapted to the voltage required by the charger or the power tool, the voltage outputted by the charging pile is converted by the voltage conversion module 117 in the adapter 101 so that the converted voltage is adapted to the charger or the power tool electrically connected to the adapter 101.

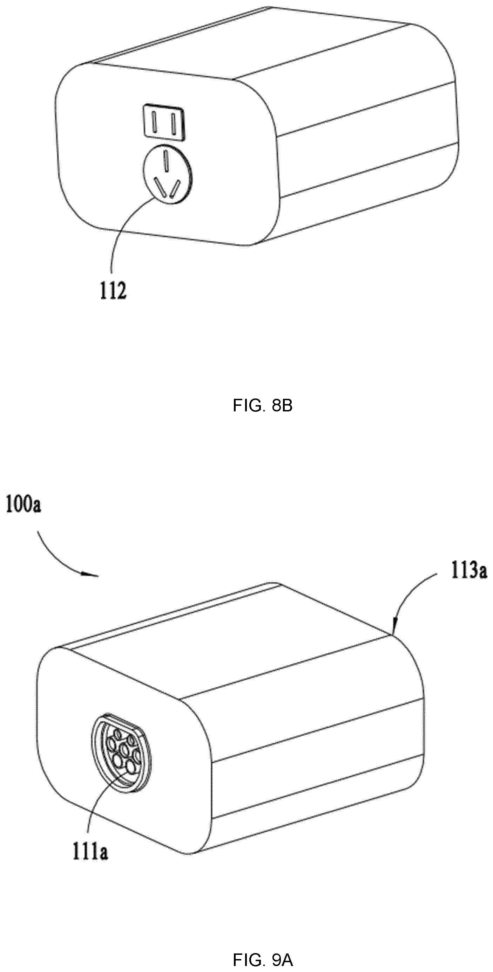

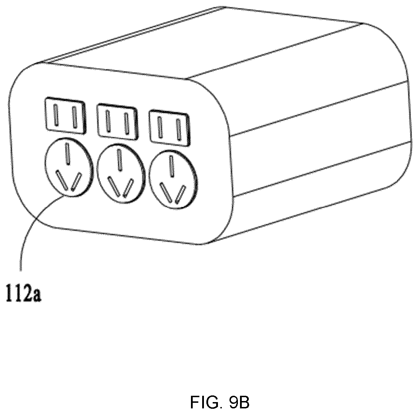

In some examples, as shown in FIGS. 8A and 8B, the adapter 100 includes a housing 113, and the first interface 111 and the second interface 112 are formed on the housing 113. The first interface 111 and the second interface 112 are of different types. The first interface 111 is used for matching the output interface of the charging pile. The second interface 112 is used for matching the interface of the charger or the power tool. Specifically, an interface 201 of a charging cable of the charging pile 200 is adapted to the first interface 111 and is pluggably connected to the first interface 111. An interface of a power cable of the charger is adapted to the second interface 112 and is pluggably connected to the second interface 112. In some examples, the first interface 111 and the second interface 112 extend to the outside of the housing through power cables. The advantage of this is that the operator can make full use of the length of the cable and the scope of use is expanded. In some examples, as shown in FIGS. 9A and 9B, an adapter 100a includes a housing 113a, and a first interface 111a and second interfaces 112a are formed on the housing 113a. Specifically, the interface 201 of the charging cable of the charging pile 200 is adapted to the first interface 111a and is pluggably connected to the first interface 111a. The interface of the power cable of the charger is adapted to the second interface 112a and is pluggably connected to the second interface 112a. The adapter 100a is provided with at least two second interfaces 112a. In this manner, the operator can electrically connect multiple loads to the adapter to improve charging efficiency.

In some examples, a charging system includes an adapter configured to receive charging power from a charging pile for charging an electric vehicle and a charger electrically connectable to the adapter and used for charging an energy storage device using the charging power. The adapter includes at least a first interface, and the first interface is adaptable to the charging pile.
above. It is to be understood by those skilled in the art that the aforementioned examples do not limit the present application in any form, and all technical solutions obtained through equivalent substitutions or equivalent transformations fall within the scope of the present application.

## Claims

1. A charging system, comprising:
an adapter configured to receive charging power from a charging pile for charging an electric vehicle; and
a charger pluggably connected to the adapter and used for charging an energy storage device using the charging power;
wherein the adapter comprises at least a first interface and at least a second interface, the first interface is adaptable to the charging pile, and the second interface is adaptable to the charger.

2. The charging system of claim 1, wherein the first interface and the second interface are of different types.

3. The charging system of claim 1, wherein the first interface is pluggably connected to the charging pile.

4. The charging system of claim 1, wherein the first interface comprises an input power terminal and a communication terminal, the power terminal is used for receiving the charging power from the charging pile, and the communication terminal is communicatively connected to a communication terminal of the charging pile so that a communication protocol between the charging pile and the adapter is implemented.

5. The charging system of claim 4, wherein a communication manner between the communication terminal of the adapter and the communication terminal of the charging pile comprises wired communication or wireless communication.

6. The charging system of claim 1, wherein the adapter further comprises a controller and a switch, and the controller is electrically connected to the switch and is used for controlling a state of the switch and thus controlling electric power output of the second interface.

7. The charging system of claim 6, wherein the adapter further comprises a detection device electrically connected to the controller, the detection device is used for detecting a current on a power path, and the controller is configured to control the switch to be turned off when the current on the power path is greater than or equal to a threshold.

8. The charging system of claim 7, wherein the adapter further comprises a voltage conversion module for converting a first voltage into a second voltage, and the second voltage is adapted to the charger.

9. The charging system of claim 1, wherein an input voltage of the first interface is a first voltage, an output voltage of the second interface is a second voltage, and the first voltage is basically equal to the second voltage.

10. The charging system of claim 1, wherein an input voltage of the first interface is a first voltage, an output voltage of the second interface is a second voltage.

11. The charging system of claim 1, wherein the second interface of the adapter comprises an output power terminal, and the output power terminal is electrically connected to the charger and used for transmitting the charging power to the charger.

12. The charging system of claim 1, wherein the adapter has at least a housing, and the first interface and the second interface are formed on the housing.

13. The charging system of claim 1, wherein the energy storage device comprises at least one battery pack, and a total capacity of the energy storage device is greater than or equal to 2 Ah and less than or equal to 25 Ah.

14. The charging system of claim 13, wherein the at least one battery pack is adaptable to at least a handheld power tool and a wheeled power tool, and the at least one battery pack is detachably mounted onto the handheld power tool or the wheeled power tool.

15. The charging system of claim 14, wherein the at least one battery pack is mounted onto the wheeled power tool to acquire the charging power.

16. A charging system, comprising:
an adapter configured to receive charging power from a charging pile for charging an electric vehicle; and
a charger electrically connectable to the adapter and used for charging an energy storage device using the charging power;
wherein the adapter comprises at least a first interface, and the first interface is adaptable to the charging pile.

17. An adapter for receiving charging power from a charging pile for charging an electric vehicle, wherein the adapter comprises:
a housing formed with or connected to at least a first interface and at least a second interface;
wherein the first interface is pluggably connected to the charging pile;
the second interface is pluggably connected to a charger or an alternating current (AC) power tool; and
the electric power of the charging pile is capable of supplying electrical energy to the charger or the AC power tool via the adapter.

18. The adapter of claim 17, wherein the first interface of the adapter comprises an input power terminal and a communication terminal, the power terminal is used for receiving the charging power from the charging pile, and the communication terminal is connected to a communication terminal of the charging pile so that a communication protocol between the charging pile and the adapter is implemented.

19. The adapter of claim 17, wherein the adapter comprises a controller and a switch, and the controller is electrically connected to the switch and is used for controlling a state of the switch and thus controlling electric power output of the second interface.

20. The adapter of claim 19, wherein the adapter further comprises a detection device electrically connected to the controller, the detection device is used for detecting a current on a power path, and the controller is configured to control the switch to be turned off when the current on the power path is greater than or equal to a threshold.
